# EUROPÄISCHE PATENTANMELDUNG

(11) **EP 2 708 787 A2**
(43) Veröffentlichungstag der Anmeldung: **19.03.2014**
(21) Anmeldenummer: 13178396.1
(22) Anmeldetag: 29.07.2013
(51) Int. Cl.: F16L 9/04

(54) **Förderrohr für den Feststofftransport mit Verschleißanzeige**

(30) Priorität: 14.09.2012 DE 102012108617
(71) Anmelder: Esser -Werke GmbH & Co. KG, 59581 Warstein (DE)
(72) Erfinder: Luig, Rüdiger, 59581 Warstein (DE)
(74) Vertreter: Ksoll, Peter

(57) **Zusammenfassung**

Die vorliegende Erfindung betrifft ein Förderrohr (1) für den Feststofftransport, das doppellagig ausgebildet ist und eine Verschleißanzeige (3) besitzt. Die Verschleißanzeige (3) ist dadurch ausgebildet, dass in dem Außenrohr (5) und zumindest teilweise im Innenrohr (4) eine Ausnehmung (7) in Form einer Bohrung vorgesehen ist, die durch einen Verschlussstopfen (6) in Form einer zumindest teilweise hohlen Verschlusshülse (11) verschlossen ist. Durch den Feststofftransport wird ein abrasiver Verschleiß erzeugt, der die Wandstärke (W4) des Innenrohres (4) reduziert. Ist die Ausnehmung (7) durch Reduzierung der Wandstärke (W4) des Innenrohres (4) erreicht, so kann gezielt ein Teilstrom durch die Verschlusshülse (11) austreten und signalisieren, dass die Verschleißgrenze erreicht ist oder aber in Kürze erreicht wird.

## Beschreibung

Die vorliegende Erfindung betrifft ein Förderrohr für den Feststofftransport mit Verschleißanzeige gemäß den Merkmalen im Oberbegriff von Patentanspruch 1.

Zur Förderung von Feststoffen, beispielsweise von Baustoffen, Beton, Kies oder Sand, erfolgt ein pneumatischer oder hydraulischer Transport durch Rohrstränge, wobei die Rohrstränge aus mehreren miteinander verbundenen Förderrohren zusammengesetzt sind. In den Förderrohren selbst wird aufgrund des Transportes des Feststoffes ein hoher abrasiver Verschleiß erzeugt. Die Feststoffteile kommen dabei während des Transportes immer wieder mit der Innenmantelfläche der Förderrohre in Kontakt und erzeugen somit den abrasiven Verschleiß.

Hierzu sind die Förderrohre, beispielsweise aus der DE 33 24 658 C2 bekannt, als doppellagige Förderrohre ausgebildet. Ein Innenrohr ist dabei ein Rohr, das aus einem Vergütungsstrahl hergestellt ist und insbesondere gehärtet ist, so dass der abrasive Verschleiß reduziert wird und die Standfestigkeit des Förderrohres gesteigert wird. Das Außenrohr selbst ummantelt das Innenrohr und ist schlagfest sowie verschweißbar ausgebildet, so dass die Rohre beispielsweise mit einem Rohrbund gekoppelt werden können.

Diese bekannten Förderrohre werden beispielsweise bei Betonpumpen oder aber auch stationär in Werken, beispielsweise in Bergwerken oder aber Sandwerken, eingesetzt, um Feststoffe zu transportieren. Dabei wäre es nur mit großem Aufwand möglich, die Rohre beispielsweise durch eine optische Innenkontrolle auf ihren Verschleißzustand hin zu überprüfen.

Mithin ist aus der DE 10 2005 051 767 A1 eine Verschleißanzeige für ein einlagiges Förderrohr bekannt, bei der bei zunehmendem Verschleiß der Innenmantelfläche des Förderrohrs zumindest ein Teilstrom des zu befördernden Mediums austritt und somit signalisiert, dass jetzt oder aber in Kürze die Verschleißgrenze des Förderrohrs erreicht ist. Das Förderrohr, welches sich nahe an der Verschleißgrenze befindet, kann somit ausgetauscht werden.

Aufgabe der vorliegenden Erfindung ist es daher, eine Verschleißanzeige für ein doppelwandiges Förderrohr für den Feststofftransport aufzuzeigen, die kostengünstig herstellbar ist, das Einsatzspektrum des Förderrohres nicht schmälert und rechtzeitig und ausfallsicher vor Erreichen der Verschleißgrenze diesen Zustand signalisiert.

Die zuvor genannte Aufgabe wird erfindungsgemäß mit einem Förderrohr für den Feststofftransport gemäß den Merkmalen im Patentanspruch 1 gelöst.

Vorteilhafte Ausgestaltungsvarianten der vorliegenden Erfindung sind Gegenstand der abhängigen Patentansprüche.

Das erfindungsgemäße Förderrohr für den Feststofftransport weist einen doppelwandigen Rohrkörper auf, der aus einem metallischen Innenrohr und einem Außenrohr ausgebildet ist, wobei in dem Rohrkörper eine Verschleißanzeige vorgesehen ist. Die Verschleißanzeige ist erfindungsgemäß dadurch ausgebildet, dass in dem Außenrohr eine Ausnehmung in Form einer Bohrung vorgesehen ist und sich die Bohrung mit einer Spitze zumindest teilweise in die Wandung des Innenrohrs erstreckt, wobei in der Ausnehmung ein Verschlussstopfen in Form einer zumindest teilweise hohlen Verschlusshülse angeordnet ist.

Das Außenrohr und das Innenrohr sind bevorzugt aus einem metallischen Werkstoff hergestellt, wobei das Innenrohr insbesondere vergütet und/oder gehärtet ist. Erfindungsgemäß ist es nunmehr vorgesehen, dass eine Ausnehmung, in Form einer Bohrung in dem Außenrohr vorgesehen ist, die die Wandung des Außenrohrs vollständig durchgreift. Die Ausnehmung bzw. Bohrung erstreckt sich zumindest teilweise von der Außenmantelfläche des Innenrohrs mit zumindest einer Spitze in die Wandung des Innenrohres. In der Ausnehmung selbst ist ein Verschlussstopfen in Form einer Verschlusshülse vorgesehen. Wird somit durch die Nutzung des Förderrohres ein Verschleiß an der Innenmantelfläche des Innenrohres erzeugt, so nimmt die Wandstärke des Innenrohres aufgrund des Verschleißes zu der Innenmantelfläche ab.

Nimmt der Verschleiß weiter zu, so erreicht die sich durch den Verschleiß einstellende in der Wandstärke reduzierte Innenmantelfläche die teilweise Erstreckung der Ausnehmung in das Innenrohr. Die Ausnehmung ist dann fluidleitend mit dem Innenraum des Förderrohres verbunden, wobei dann in der Ausnehmung der gleiche Förderdruck anliegt, wie er auch in dem Innenraum des Rohres anliegt. Damit nunmehr nicht ein austretender Strahl des zu transportierenden Mediums aus der Ausnehmung sich von dem Förderrohr aus verbreitet, ist ein Verschlussstopfen vorgesehen. Erfindungsgemäß kann der Verschlussstopfen bersten, platzen oder auch eine optische Anzeige aufweisen, die signalisiert, dass die Verschleißgrenze erreicht ist oder aber in Kürze erreicht wird. Die Ausnehmung kann dann durch eine außen auf das Förderrohr aufgesetzte Schelle bzw. Manschette oder aber auch durch eine in die Ausnehmung bzw. in den Verschlussstopfen eingebrachte Schraube oder einen Niet verschlossen werden, so dass zunächst die Förderung weiter fortgesetzt werden kann bzw. der Produktionsprozess oder Förderprozess beendet werden kann und erst dann ein Austauschen des Rohres erfolgen kann.Der erfindungsgemäße Vorteil liegt somit in einer günstig herzustellenden Möglichkeit, dauerhaft und in Echtzeit den individuellen Verschleißzustand eines jeden Förderrohres festzustellen und bei Erreichen der Verschleißgrenze die Förderung zumindest temporär fortzusetzen.

Der Verschlussstopfen ist hierzu als Verschlusshülse ausgebildet, wobei die Verschlusshülse zumindest teilweise hohl ausgebildet ist und die Verschlusshülse insbesondere aus einer Leichtmetalllegierung ausgebildet ist. Im Rahmen der Erfindung ist die Verschlusshülse in einer weiteren bevorzugten Ausführungsvariante alternativ zu der zuvor beschriebenen Leichtmetalllegierung auch aus einem metallischen Werkstoff ausgebildet. Diese ist bevorzugt nicht gehärtet und auch nicht vergütet. Die Verschlusshülse selbst weist somit eine geringere Härte und/oder Festigkeit auf als die Werkstoffe von Innenrohr bzw. Außenrohr.

Insbesondere weist die Verschlusshülse einen Boden auf, wobei bei Erreichen der Ausnehmung der Boden der Verschlusshülse mit dem Förderdruck beaufschlagt wird und dabei berstet und/oder platzt, so dass zumindest ein Teilstrom des zu fördernden Mediums durch die Verschlusshülse austritt. Die Verschlusshülse selbst kann dann wiederum durch eine außenliegende Manschette oder aber durch eine Schraube bzw. ein Niet verschlossen werden, so dass die Förderung des Feststofftransportes zumindest beendet werden kann oder aber das Rohr noch für einen gewissen Zeitraum genutzt werden kann, bevor es ausgetauscht wird.

Der Verschlussstopfen selbst ist dazu insbesondere in der Ausnehmung stoffschlüssig und/oder formschlüssig und/oder kraftschlüssig angeordnet. Insbesondere ist vorgesehen, dass der Verschlussstopfen in der Ausnehmung verklebt ist. Im Rahmen der Erfindung ist es jedoch auch vorstellbar, dass der Verschlussstopfen selbst in der Ausnehmung verschweißt wird. Beispielsweise kann hier ein Widerstandspunktschweißen verwendet werden. Ebenfalls ist es möglich, dass der Verschlussstopfen in der Ausnehmung verpresst wird, insbesondere wenn der Verschlussstopfen aus einem Leichtmetall ausgebildet ist. Die zuvor genannten Fügungsmöglichkeiten sind im Rahmen der Erfindung auch untereinander kombinierbar, so dass es beispielsweise vorstellbar ist, den Verschlussstopfen zu verkleben und gleichzeitig innerhalb der Ausnehmung zu verpressen bzw. zu vernieten.

Im Rahmen der Erfindung ist es jedoch ebenfalls möglich, dass der Verschlussstopfen als Madenschraube ausgebildet ist, so dass dieser in die Ausnehmung eingeschraubt wird. Optional hierzu kann der Verschlussstopfen dann in der Ausnehmung verklebt und/oder verschweißt werden.

Innerhalb des Förderrohres werden Medien mit einem Betriebsdruck zwischen 5 und 250 bar, insbesondere zwischen 80 und 180 bar gefördert. Im Rahmen der Erfindung werden insbesondere für den Feststofftransport Förderdrücke zwischen 60 und 100 bar und insbesondere zwischen 80 und 90 bar eingesetzt. Es ist jedoch notwendig, dass die Förderrohre zum Betrieb doppelte Sicherheit aufweisen, weshalb sie Drücken von bis zu mehr als 160 bar standhalten müssen. Die Koppelungsmöglichkeit des Verschlussstopfens in der Ausnehmung ist daher insbesondere derart zu wählen, dass sie dem zu erwartenden Förderdruck des Förderrohres standhält.

Im Rahmen der Erfindung ist zur günstigen und einfachen Herstellbarkeit der erfindungsgemäßen Verschleißanzeige die Ausnehmung insbesondere als Sacklochbohrung ausgebildet. Die Spitze der Bohrung ragt somit zumindest teilweise in die Wandung des Innenrohrs hinein.

Im Rahmen der Erfindung ist es nunmehr möglich, dass in der Spitze der Bohrung durch den eingesetzten Verschlussstopfen ein Hohlraum ausgebildet ist. Im Rahmen der Erfindung überdeckt jedoch der Verschlussstopfen in Radialrichtung insbesondere die Trennfuge zwischen Innenrohr und Außenrohr in Richtung zu dem Innenrohr. Wird durch den abrasiven Verschleiß der Innenmantelfläche des Innenrohrs der Hohlraum erreicht, so breitet sich der Betriebsdruck bzw. Förderdruck in dem Hohlraum aus. Von dem Hohlraum aus liegt dann der Betriebsdruck auch an einer Unterseite des Verschlussstopfens an. Hier kann er beispielsweise bei einem Verschlussstopfen in Form einer Verschlusshülse mit Boden den Boden der Verschlusshülse bersten bzw. zum Aufplatzen bringen, so dass dann das Medium im kontrollierten Maße durch den entstandenen Riss aus der Verschlusshülse austritt und einem anwendenden Monteur signalisiert, dass der Verschleiß des in Rede stehenden Förderrohrs erreicht ist, oder aber in Kürze erreicht wird. Im Rahmen der Erfindung kann dazu in dem Boden eine Nut oder Sollbruchstelle vorgesehen sein.

Im Rahmen der Erfindung ist es jedoch ebenfalls möglich, dass die Verschlusshülse spitz zulaufend ausgebildet ist und bis in die Spitze der Bohrung formschlüssig zur Anlage kommt. Im Rahmen der Erfindung weist somit die Spitze der Verschlusshülse einen korrespondierenden Winkel auf, zu der Spitze der Bohrung. Hierzu ist dann insbesondere die Spitze der Verschlusshülse mit einer Wandstärke ausgebildet, die geringer ist als die Wandung der Verschlusshülse selbst. Erreicht somit wiederum der abrasive Verschleiß von einer Innenseite des Innenrohres her die Spitze der Ausnehmung, wird unmittelbar danach auch die Spitze der Schlusshülse durch den abrasiven Verschleiß abgetragen und es tritt wiederum in kontrollierter Weise ein Teilstrom des Mediums durch die Verschlusshülse an die Umgebung aus und signalisiert, dass der Verschleiß erreicht ist oder aber kurz bevorsteht.

Damit auch bei stark von außen verschmutzen Förderrohren der auftretende Teilstrom sichtbar ist, ist insbesondere in Indikationsmittel in der Verschlusshülse angeordnet, beispielsweise eine Warnfarbe oder aber ein chemisches Reagenz, das zusammen mit dem auftretenden Teilstrom des zu fördernden Mediums eine Einfärbung der Verschlusshülse oder aber des die Verschlusshülse umgebenden Bereiches erzeugt, so dass hier beispielsweise optisch nicht nur durch den austretenden Teilstrom, sondern durch eine Einfärbung des Bereiches beispielsweise in einer Warnfarbe oder in einer anderen signalisierenden Farbe, die sich insbesondere von dem zu fördernden Medium absetzt, ein sicheres Erfassen bzw. Erkennen der Verschleißgrenze ermöglichen.

Ist die Verschleißgrenze des Innenrohrs erreicht, so dass ein Medium aus der Verschlusshülse austritt, so ist die durch den austretenden Teil beschädigte Verschlusshülse verschließbar. Insbesondere erfolgt das Verschließen über eine das Rohr außen umgebende Manschette oder aber alternativ durch eine in die Verschlusshülse einsetzbare Schraube oder aber einen einsetzbaren Niet. Der Fördervorgang kann somit beendet werden und danach das Förderrohr ausgetauscht werden.

Weitere Vorteile, Merkmale, Eigenschaften und Aspekte der vorliegenden Erfindung sind Gegenstand der nachfolgenden Beschreibung. Bevorzugte Ausführungsvarianten werden in den schematischen Figuren dargestellt. Diese dienen dem einfachen Verständnis der Erfindung. Es zeigen:
- Figur 1: ein erfindungsgemäßes Förderrohr in einer perspektivischen Ansicht,
- Figur 2: ein Förderrohr in einer Querschnittsansicht durch die Verschleißanzeige,
- Figur 3: eine erfindungsgemäße Verschlusshülse in einem Teilausschnitt des Vorderrohres mit spitzem Boden und
- Figur 4: eine erfindungsgemäße Verschlusshülse in einer Teilansicht des Rohrabschnittes mit geradem Boden.

In den Figuren werden für gleiche oder ähnliche Bauteile dieselben Bezugszeichen verwenden, auch wenn eine wiederholte Beschreibung aus Vereinfachungsgründen entfällt.

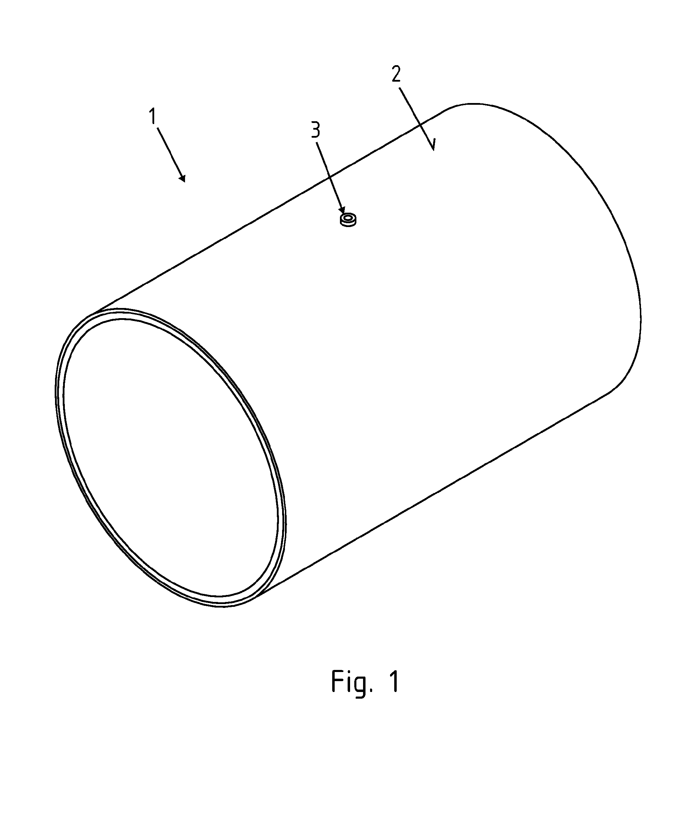

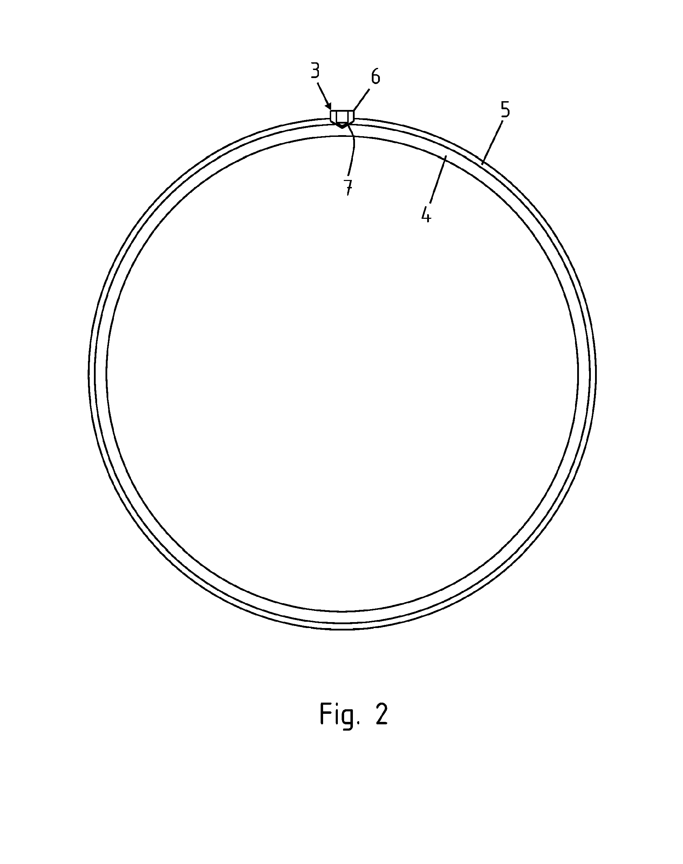

Figur 1 zeigt ein erfindungsgemäßes Förderrohr 1 für den Feststofftransport. Auf einer Außenmantelfläche 2 des Förderrohrs 1 ist eine Verschleißanzeige 3 in Form eines Verschlussstopfens angeordnet. Gemäß der Querschnittsansicht von Figur 2, die durch die Verschleißanzeige 3 hindurch folgt, besteht das Förderrohr 1 aus einem Innenrohr 4 sowie einem das Innenrohr 4 umgebenden Außenrohr 5. Die Verschleißanzeige 3 ist durch einen Verschlussstopfen 6 ausgebildet, wobei der Verschlussstopfen 6 in einer Ausnehmung 7 angeordnet ist.

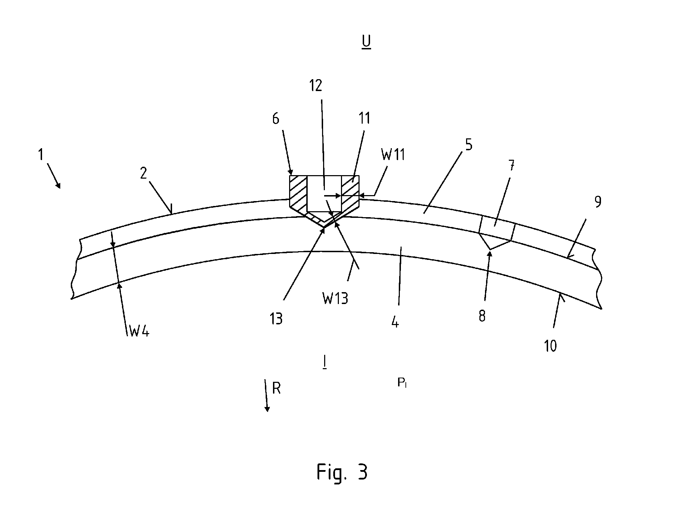

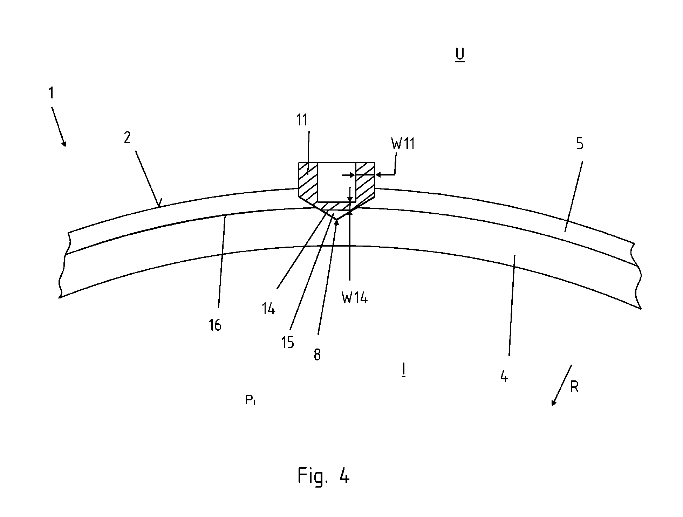

Nähere Details werden in den Figuren 3 und 4 erläutert. Die Ausnehmung 7 selbst erstreckt sich dabei von der Außenmantelfläche 2 des Förderrohrs 1 in Radialrichtung R durch das Außenrohr 5 bis zumindest teilweise in das Innenrohr 4. Eine Spitze 8 der Ausnehmung 7 ragt dabei von einer Außenmantelfläche 9 des Innenrohrs 4 in Richtung zu einer Innenmantelfläche 10 des Innenrohrs 4. Ist von einer Innenmantelfläche 10 des Innenrohrs 4 die Wandstärke W4 derart weit abrasiv verschlissen, dass sie bis auf die Spitze 8 der Ausnehmung 7 reduziert wurde, so liegt der in dem Innenraum I des Förderrohrs 1 anliegende Förderdruck Pₗ auch an der Spitze 8 der Ausnehmung 7 an.

Damit das in dem Innenraum I nicht näher dargestellte Medium nunmehr nicht an die Umgebung U frei austritt, ist in der Ausnehmung 7 der Verschlussstopfen 6 in Form einer Verschlusshülse 11 angeordnet. Die Verschlusshülse 11 weist einen innenliegenden Hohlraum 12 auf sowie eine Verschlussspitze 13. Die Verschlussspitze 13 und die Verschlusshülse 11 sind dabei derart ausgebildet, dass sie die Ausnehmung 7 formschlüssig vollständig ausfüllen. Insbesondere ist die Verschlusshülse 11 in der Ausnehmung 7 eingeklebt. Die Verschlussspitze 13 der Verschlusshülse 11 weist eine Wandstärke auf, die geringer ist als die Wandung W11. Ist somit die Ausnehmung 7 durch den abrasiven Verschleiß erreicht, wird die Verschlussspitze 13 der Verschlusshülse 11 weiterhin durch den Feststofftransport abrasiv verschlissen.

Die Verschlussspitze 13 der Verschlusshülse 11 wird durch den abrasiven Verschleiß verschlissen oder aber durch den anliegenden Druck Pₗ derart beschädigt, dass ein in dem Innenraum I vorhandenes Medium zumindest teilweise durch den Hohlraum 12 der Verschlusshülse 11 an die Umgebung U austritt. Hierdurch wird signalisiert, dass die Wandstärke W4 des Innenrohres 4 derart stark abgenommen hat, dass eine Verschleißgrenze erreicht ist oder aber in Kürze erreicht wird. Damit die Förderung des Feststoffes zu Ende geführt werden kann, kann dann in den Hohlraum 12 der Verschlusshülse 11 eine Schraube oder ein Niet eingeführt werden oder aber über die Verschlusshülse 11 kann eine Manschette außenseitig auf die Außenmantelfläche 2 des Förderrohres 1 aufgesetzt werden.

In Figur 4 dargestellt ist eine weitere Ausführungsvariante der vorliegenden Erfindung, wobei hier die Verschlusshülse 11 nicht mit einer Verschlussspitze 13, sondern mit einem Boden 14 ausgebildet ist. Auch die Wandstärke W14 des Bodens 14 ist geringer ausgebildet als die Wandung W11 der Verschlusshülse 11 selbst. Die Spitze 8 der Ausnehmung 7 ist jedoch durch den gerade verlaufenden Boden 14 nicht formschlüssig ausgefüllt, so dass zwischen dem Boden 14 und der Spitze 8 der Ausnehmung 7 ebenfalls ein Hohlraum 15 entsteht. Bei Erreichen des abrasiven Verschleißes der Spitze der Ausnehmung wird der Hohlraum 15 mit dem gleichen Druck Pₗ ausgelastet, wie er im Innenraum I des Förderrohres 1 anliegt. Der Druck Pₗ liegt somit auch an dem Boden 14 der Verschlusshülse 11 an, wobei der Boden 14 der Verschlusshülse 11 durch den anliegenden Druck kontrolliert platzt und/oder berstet, so dass wiederum ein Teilstrom des zu transportierenden Feststoffes an die Umgebung austritt. Auch hier ist es wiederum möglich, dass die Verschlusshülse 11 durch eine Schraube oder ein Niet bzw. durch eine außen aufgesetzte Manschette verschlossen wird. Im Rahmen der Erfindung ist es insbesondere von Vorteil, wenn die Verschlusshülse 11 derart weit bis in das Innenrohr 4 in die Wandstärke W4 des Innenrohres 4 hineinragt, dass eine zwischen Innenrohr 4 und Außenrohr 5 ausgebildete Trennfuge 16 von der Außenmantelfläche des Förderrohrs 1 her durch die Verschlusshülse 11 in Radialrichtung R überdeckt ist. Hierdurch wird sichergestellt, dass kein Medium zwischen Innenrohr 4 und Außenrohr 5 des Förderrohrs 1 strömt.

### Bezugszeichen:

- 1 -: Förderrohr
- 2 -: Außenmantelfläche zu 1
- 3 -: Verschleißanzeige
- 4 -: Innenrohr
- 5 -: Außenrohr
- 6 -: Verschlussstopfen
- 7 -: Ausnehmung
- 8 -: Spitze zu 7
- 9 -: Außenmantelfläche zu 4
- 10 -: Innenmantelfläche zu 4
- 11 -: Verschlusshülse
- 12 -: Hohlraum zu 11
- 13 -: Verschlussspitze
- 14 -: Boden
- 15 -: Hohlraum
- 16 -: Trennfuge

- I -: Innenraum
- U -: Umgebung
- W4 -: Wandstärke zu 4
- W11 -: Wandung zu 11
- W13 -: Wandstärke zu 13
- R -: Radialrichtung
- P_{I} -: Förderdruck

## Patentansprüche

1. Förderrohr (1) für den Feststofftransport, aufweisend einen doppelwandigen Rohrkörper, bestehend aus einem metallischen Innenrohr (4) und einem Außenrohr (5), wobei in dem Rohrkörper eine Verschleißanzeige (3) vorgesehen ist, **dadurch gekennzeichnet, dass** in dem Außenrohr (5) eine Ausnehmung (7) in Form einer Bohrung vorgesehen ist und sich die Bohrung mit einer Spitze (8) zumindest teilweise bis in die Wandung (W4) des Innenrohrs (4) erstreckt, wobei in der Ausnehmung (7) ein Verschlussstopfen (6) in Form einer zumindest teilweise hohlen Verschlusshülse (11) angeordnet ist.

2. Förderrohr nach Anspruch 1, **dadurch gekennzeichnet, dass** die Verschlusshülse (11) aus einer Leichtmetalllegierung oder aus einer metallischen Legierung ausgebildet ist.

3. Förderrohr nach einem der Ansprüche 1 oder 2, **dadurch gekennzeichnet, dass** die Verschlusshülse (11) in der Ausnehmung (7) stoffschlüssig und/oder formschlüssig und/oder kraftschlüssig angeordnet ist, wobei die Verschlusshülse (11) insbesondere in der Ausnehmung (7) verklebt ist.

4. Förderrohr nach einem der Ansprüche 1 bis 3, **dadurch gekennzeichnet, dass** mit dem Förderrohr (1) Medien mit einem Betriebsdruck zwischen 5 und 250bar, insbesondere zwischen 80 und 180bar förderbar sind, bevorzugt zwischen 80 und 90bar.

5. Förderrohr nach einem der Ansprüche 1 bis 4, **dadurch gekennzeichnet, dass** die Ausnehmung (7) als Sacklochbohrung, ausgebildet ist.

6. Förderrohr nach Anspruch 5, **dadurch gekennzeichnet, dass** in der Spitze (8) der Bohrung bei eingesetzter Verschlusshülse (11) ein Hohlraum (15) ausgebildet ist.

7. Förderrohr nach einem der Ansprüche 1 bis 6, **dadurch gekennzeichnet, dass** in der Verschlusshülse (11) ein Boden (14) ausgebildet ist, wobei der Boden (14) den Hohlraum (12) der Spitze (8) der Bohrung von der Umgebung abdichtet.

8. Förderrohr nach einem der Ansprüche 1 bis 7, **dadurch gekennzeichnet, dass** die Verschlusshülse (11) spitz zulaufend ausgebildet ist und bis in die Spitze (8) der Bohrung formschlüssig zur Anlage kommt.

9. Förderrohr nach einem der Ansprüche 1 bis 8, **dadurch gekennzeichnet, dass** die Verschlusshülse (11) eine Verschlussspitze (13) aufweist, wobei die Verschlussspitze (13) eine gegenüber der Wandung (W11) der Verschlusshülse (11) geringere Wandstärke (W13) aufweist.

10. Förderrohr nach einem der Ansprüche 1 bis 9, **dadurch gekennzeichnet, dass** bei Erreichen der Verschleißgrenze des Innenrohrs (4) die Verschlusshülse (11) beschädigt wird, wobei ein Teilstrom des zu transportierenden Feststoffes aus der Verschlusshülse (11) an die Umgebung (U) austritt.

11. Förderrohr nach Anspruch 10, **dadurch gekennzeichnet, dass** die beschädigte Verschlusshülse (11) verschließbar ist, bevorzugt mit einer Manschette und/oder mit einer Schraube oder einem Niet.
